# EUROPÄISCHE PATENTSCHRIFT

(11) **EP 3 330 027 B1**
(45) Veröffentlichungstag und Bekanntmachung des Hinweises auf die Patenterteilung: **10.01.2024**
(21) Anmeldenummer: 17203504.0
(22) Anmeldetag: 24.11.2017
(51) Int. Cl.: B23D 57/00, B65H 75/28

(54) **TROMMEL FÜR DRAHTSÄGE**
DRUM FOR WIRE SAW
TAMBOUR POUR SCIE À FIL

(30) Priorität: 30.11.2016 DE 102016123127
(43) Veröffentlichungstag der Anmeldung: 06.06.2018
(73) Patentinhaber: Ebner, Daniel, 1808 Les Monts-de-Corsier (CH)
(72) Erfinder: Ebner, Daniel, 1808 Les Monts-de-Corsier (CH)
(74) Vertreter: P&TS SA (AG, Ltd.)

(56) Entgegenhaltungen:
- DE-A1- 2 536 357
- US-A- 823 401

## Beschreibung

### Technisches Gebiet

Die Erfindung bezieht sich auf eine Trommel für eine Drahtsäge nach dem Oberbegriff des Anspruchs 1.

### Stand der Technik

Diamantdrahtsägen können sehr dünne Schichten von sehr vielen Materialen abschneiden. Dazu wird eine zu schneidende Materialprobe gegen einen sich in Drahtrichtung bewegenden Diamantdraht geschoben. Der Diamantdraht wird dazu auf eine Trommel aufgewickelt und mit beiden Enden des Diamantdrahts an der Trommel befestigt. Eine Wicklung weist dabei eine grössere Schlinge auf, die in der Drahtsäge um eine gegenüber der Trommel angeordnete Umlenkrolle geführt wird. Dadurch kann die um die Umlenkrolle laufende Schlinge durch eine Drehung der Trommel von einem Ende des Diamantdrahts zu dem anderen Ende des Diamantdrahts geführt werden und eine kontinuierliche Diamantdrahtbewegung erreicht werden. Während der Drehung der Trommel wird diese gleichzeitig axial verschoben, so dass sich die absolute Position der Schlaufe zu der Umlenkrolle nicht verändert. Nach Erreichen des anderen Endes, kann die Drehrichtung der Trommel umgedreht werden, um den Schneideprozess fortzuführen.

Der Diamantdraht wird auf einer schneckenförmig um die Mantelfläche laufenden Rille (ähnlich wie ein Schraubgewinde) aufgewickelt. Zur Befestigung der Drahtenden an der Trommel ist im Stand der Technik an den beiden Stirnseiten der Trommel jeweils eine Klemmschraube angebracht. Der auf der Mantelfläche der Trommel aufgewickelte Draht wird über einen rechtwinkelig zu der Wickelrichtung führenden Schlitz über die Kante von der Mantelfläche zu der Stirnseite der Trommel geführt und mit einer Drahtschlinge unter dem Schraubkopf eingeklemmt. An einer der beiden Stirnseiten, muss zusätzlich noch ein Stift auf der Mantelfläche angeordnet werden, damit der aufzuwickelnde Draht nicht aus der schneckenförmigen Rille rutscht. Die starken Biegungen des Drahts und die Befestigung unter dem Schraubenkopf können, insbesondere bei weniger erfahrenen Benutzern, zu einem Brechen des Drahts führen. Danach muss ein neuer Draht bestellt und aufgewickelt werden. Diese Lösung ist aufwendig und nicht benutzerfreundlich. Ausserdem wird bei der Herstellung der schneckenförmigen Rille nicht auf deren relative Position zu dem Stift geachtet, so dass der an dem Stift anliegende Draht mal mehr oder weniger gut in der schneckenförmigen Rille liegt.

Der DE2536357 ist eine Trommel für eine Drahtsäge nach dem Oberbegriff des Anspruchs 1 zu entnehmen. In DE2536357 ist die Klemmschraube auf der Mantelfläche angeordnet. Auch hier wird bei der Herstellung der schneckenförmigen Rille nicht auf deren relative Position zu den Klemmschrauben geachtet, so dass es bei der Führung des Drahts zu Ungenauigkeiten kommen kann. Die Schrauben auf der Mantelfläche haben weiter den Nachteil, dass sie einen grossen Beitrag zur Unwucht der Trommel beitragen.

### Darstellung der Erfindung

Es ist ein Ziel der Erfindung, eine Trommel für Drahtsägen zu entwickeln, die benutzerfreundlicher ist und das Risiko von Drahtbrüchen beim Befestigen der Drahtenden reduziert.

Dieses Ziel ist durch eine Trommel mit den Merkmalen des Anspruchs 1 gelöst.

Die Trommel weist eine erste Vertiefung in der Mantelfläche zur Führung des ersten Ende des Drahts zu dem ersten Klemmmechanismus auf.

Die erste Vertiefung senkt sich in eine Richtung, in der der Draht von der Mantelfläche in die erste Vertiefung geführt wird, von der Mantelfläche in die erste Vertiefung ab. Dies erlaubt den Draht sicher und einfach in der Vertiefung zu dem ersten Klemmmechanismus zu führen. Dies erleichtert die Befestigung des ersten Drahtendes und reduziert die Wahrscheinlichkeit eines Drahtbruchs. Die erste Vertiefung erlaubt weiterhin, die Anordnung des Klemmmechanismus zu optimieren, ohne die Benutzerfreundlichkeit und die Drahtintegrität beim Einfädeln des Drahts zu gefährden.

Dadurch, dass der Klemmmechanismus in einer Vertiefung in der Mantelfläche der Trommel angeordnet ist, muss der Draht nicht mehr mit starken Biegungen von der Mantelfläche auf die Stirnseite geführt werden. Dies reduziert das Risiko eines Drahtbruchs bei der Befestigung des Drahtendes. Ausserdem kann durch die Anordnung des Klemmmechanismus in der Vertiefung eine durch den Klemmmechanismus verursachte Unwucht der Trommel verringert werden.

Der Klemmmechanismus weist einen Klemmblock mit einer Klemmfläche auf, wobei die Klemmfläche des Klemmblocks zum Einklemmen des Drahtendes ohne Drehung der Klemmfläche verschiebbar ist. Durch das Ersetzen der Schraubkopfes als Klemmfläche durch einen sich nicht drehenden Klemmblock werden die durch die Drehung des Schraubkopfs auf den Draht generierten Scherkräfte vermieden und somit das Risiko eines Drahtbruchs reduziert. Zusätzlich muss der Draht unter dem Klemmblock auch nicht in Form einer Schlinge unter dem Klemmblock festgeklemmt werden, wodurch die Biegekräfte auf den Draht reduziert werden, und somit das Risiko eines Drahtbruchs weiter reduziert wird.

Diese Ausführungsbeispiele können nicht erfindungsgemäß unabhängig voneinander verwendet werden. Aber deren Kombination führt zu einer besonders benutzerfreundlichen Trommel, die einen Drahtbruch bei der Befestigung auch für unerfahrene Benutzer nahezu ausschliesst.

Weitere vorteilhafte Ausführungsformen sind in den abhängigen Ansprüchen angegeben.

In einem Ausführungsbeispiel führt die schneckenförmige Rille in die erste Vertiefung. Dies hat den Vorteil, dass der Draht direkt von der Führung oder der Rille in die Vertiefung zum Festklemmen geführt wird. In einem Ausführungsbeispiel weist die Mantelfläche eine zweite Vertiefung zur Führung des zweiten Drahtendes zu dem zweiten Befestigungsmechanismus auf, wobei auch das gegenüberliegende Ende der Rille in die zweite Vertiefung führt. Dies erlaubt eine besonders gute Führung des Drahtes zwischen der ersten und zweiten Vertiefung auf der Mantelfläche, während die beiden Drahtenden durch die Vertiefungen einfach und sicher zu den beiden Befestigungsmechanismen geführt werden. Die Herstellung einer schneckenförmigen Rille, deren Enden genau definiert sind, ist sehr aufwendig und wurde für bestehende Lösungen zur Befestigung der Drahtenden nicht benötigt. Deshalb wurde solche aufwendigen Hochpräzisionsgewinde noch nie für Trommeln für Drahtsägen in Betracht gezogen. Dies verbessert aber die Führung des Drahtes von einer Vertiefung zur anderen signifikant. Durch die Kombination aus der ersten Vertiefung, die direkt in die schneckenförmige Rille führt, der Rille, die direkt in die zweite Vertiefung führt, und der zweiten Vertiefung kann von dem ersten Befestigungsmechanismus bis zu dem zweiten Befestigungsmechanismus eine durchgehende stabile und einfache Führung des Drahts erreicht werden.

Besonders vorteilhaft ist dabei, dass eine Ebene, in der das Drahtende in dem Klemmmechanismus eingeklemmt wird, grundsätzlich mit einem kleinen Winkel oder in der Verlängerung der Rille liegt. Dadurch muss der Draht in Richtung der Drahtachse nicht oder kaum gebogen werden und der aus der ersten Vertiefung kommende Draht wird zuverlässig in die richtige Rille gewickelt.

### Kurze Beschreibung der Figuren

Die Erfindung wird anhand der beigefügten Figuren näher erläutert, wobei zeigen
- **Fig. 1**: eine Seitenansicht einer ersten Stirnseite eines Ausführungsbeispiels der erfindungsgemässen Trommel;
- **Fig. 2**: eine Seitenansicht einer Mantelfläche des Ausführungsbeispiels der erfindungsgemässen Trommel;
- **Fig. 3**: eine Seitenansicht einer zweiten Stirnseite des Ausführungsbeispiels der erfindungsgemässen Trommel;
- **Fig. 4**: eine Vergrösserung des Bereichs IV in Fig. 1;
- **Fig. 5**: eine Vergrösserung des Bereichs V in Fig. 2;
- **Fig. 6**: eine Vergrösserung des Bereichs VI in Fig. 2;
- **Fig. 7**: eine Vergrösserung des Bereichs VII in Fig. 3;
- **Fig. 8**: eine erste dreidimensionale Darstellung des Ausführungsbeispiels der erfindungsgemässen Trommel;
- **Fig. 9**: eine zweite dreidimensionale Darstellung des Ausführungsbeispiels der erfindungsgemässen Trommel;
- **Fig. 10**: eine Vergrösserung des Bereichs X in Fig. 8 und
- **Fig. 11**: eine Vergrösserung des Bereichs XI in Fig. 9.
- **Fig. 12**: ein erster Schnitt entlang der Linie XII-XII aus Fig. 13 eines weiteren Ausführungsbeispiels der erfindungsgemässen Trommel.
- **Fig. 13**: ein zweiter Schnitt entlang der Linie XIII-XIII aus Fig. 12 des weiteren Ausführungsbeispiels der erfindungsgemässen Trommel.

### Wege zur Ausführung der Erfindung

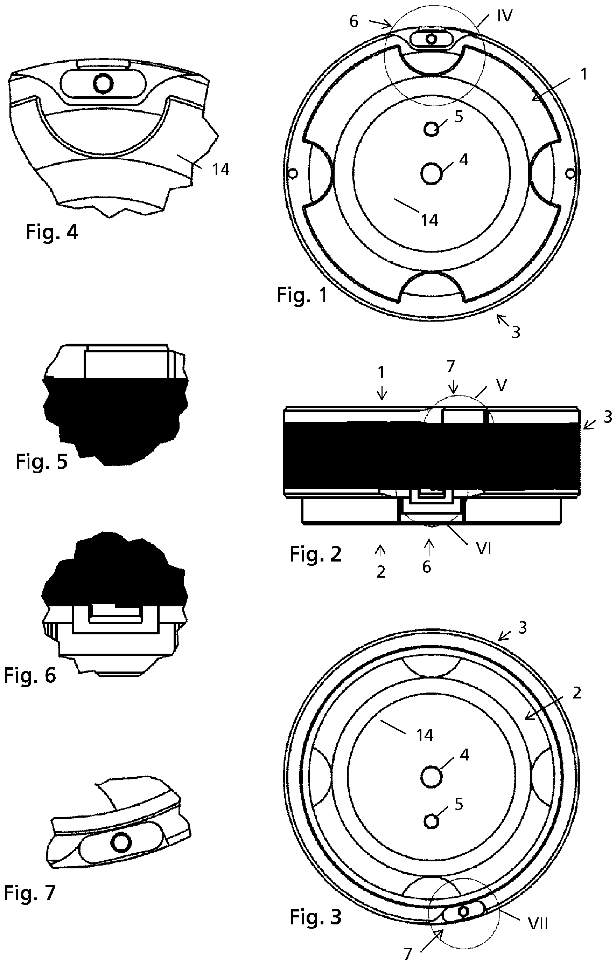

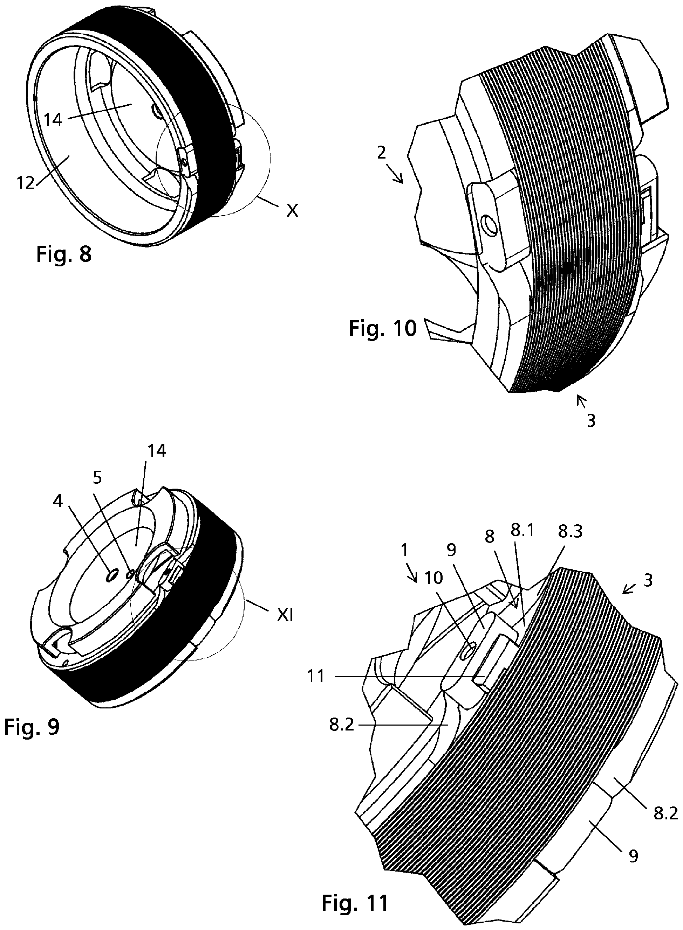

Die Figuren 1 bis 11 zeigen ein Ausführungsbeispiel einer erfindungsgemässen Trommel für Drahtsägen. Vorzugsweise wird als Draht Diamantdraht verwendet. Allerdings ist auch die Verwendung von anderen Schneidedrähten möglich.

Die Trommel ist grundsätzlich zylinderförmig und weist eine erste Stirnseite 1, eine zweite Stirnseite 2 und eine Mantelfläche 3 auf. Die Mantelfläche 3 weist eine Aufrollfläche auf, die rotationssymmetrisch um eine Zylinderachse, auch Drehachse genannt, der Trommel angeordnet ist (Nur die Fläche ist rotationssymmetrisch, nicht die nachfolgend beschriebene schneckenförmige Rille). Die Aufrollfläche weist eine schneckenförmige Rille auf, deren Schneckenachse mit der Trommelachse übereinstimmt. Die Rille läuft somit eine bestimmte Anzahl mal auf der Mantelfläche 3 um die Drehachse der Trommel. Dadurch kann ein Draht entlang der Rille in einer wohldefinierten Führung um die Trommel gewickelt werden. Vorzugsweise ist die erste Stirnseite 1 zumindest teilweise abgedeckt, während die zweite Stirnseite 2 zur Montage der Trommel auf einer Drehvorrichtung einer Drahtsäge oder einer Wickelvorrichtung offen ist. Die Trommel kann zum Beispiel mit einer Schraube durch die durch die Trommelachse verlaufende Öffnung 4 in der ersten Stirnseite 1 auf der Drehvorrichtung befestigt werden. Zur Arretierung der Trommel auf der Drehvorrichtung könnte zum Beispiel ein Stift der Drehvorrichtung in einer Öffnung 5 in der ersten Stirnseite im befestigten Zustand eingeführt sein, wobei die Öffnung 5 exzentrisch zu der Drehachse der Trommel angeordnet sein muss. Allerdings können die Stirnseiten 1 und 2 in Abhängigkeit der Drehvorrichtung der Drahtsäge oder der Wickelvorrichtung auch anders aufgebaut sein.

Vorzugsweise ist die Trommel hohlzylinderförmig ausgebildet. Eine Innenmantelfläche 12 grenzt die Hohlzylinderöffnung radial nach aussen ab. Die Innenmantelfläche 12 ist entgegengesetzt zu der Mantelfläche 3 angeordnet. Vorzugsweise zeigt die Innenmantelfläche 12 grundsätzlich radial zur Trommelachse, und die Mantelfläche 3 radial zu der Trommelachse nach aussen. Die Trommel weist vorzugsweise einen Hauptsteg 14 zwischen den Innenmantelflächen 12 auf. Der Hauptsteg 14 weist vorzugsweise die Öffnung 4 und/oder die Öffnung 5 auf. Der Hauptsteg 14 ist in dem ersten Ausführungsbeispiel als Abschluss der ersten Stirnseite 1 ausgebildet. Der Hauptsteg 14 kann aber auch vertieft in der ersten Stirnseite 1 angeordnet sein, so dass Innenmantelfläche 12 auf beiden Seiten des Hauptstegs 14 ausgebildet wird.

Die Trommel weist weiterhin einen ersten Klemmmechanismus 6 und einen zweiten Klemmmechanismus 7 auf. In dem gezeigten Ausführungsbeispiel beginnt die Wicklung des Drahts bei dem zweiten Klemmmechanismus 7 und endet an dem ersten Klemmmechanismus 6. Allerdings soll die Erfindung nicht darauf beschränkt sein, dass der erste Klemmmechanismus 6 für das Ende des Drahtes ist, mit dem das Aufwickeln beginnt, sondern kann auch das Ende des Drahtes sein, mit dem das Aufwickeln beendet wird.

Die Trommel weist eine erste Vertiefung 8 zur Führung des ersten Endes des Drahts zu dem ersten Klemmmechanismus 6 und/oder eine zweite Vertiefung 8 zur Führung des zweiten Endes des Drahts zu dem zweiten Klemmmechanismus 7 auf. Die erste Vertiefung 8 senkt sich in eine bestimmte Richtung von der Mantelfläche 3 ab. Die bestimmte Richtung ist die Richtung, in der der Draht von der Mantelfläche 3 in die erste Vertiefung 8 geführt werden kann.

Die bestimmte Richtung ist vorzugsweise die Wickelrichtung. Die bestimmte Richtung ist vorzugsweise die Richtung, in der der Draht aus der Rille herausläuft, bevor er in die erste Vertiefung 8 hineinläuft. Die bestimmte Richtung ist vorzugsweise grundsätzlich parallel zu den Rillen(ebenen). Eine Rillenebene ist die Ebene, die durch einen Umlauf der Rille unter Vernachlässigung des Schneckenwinkels gebildet wird. Die bestimmte Richtung ist vorzugsweise die Umfangsrichtung an der ersten Vertiefung 8, d.h. die Tangente auf Mantelfläche 3 in der Ebene, die rechtwinkelig zu der Trommelachse aufgespannt wird. Auch wenn es möglich ist, dass die erste Vertiefung 8 sich in der bestimmten Richtung sprunghaft und/oder über eine Kante absenkt, so ist es bevorzugt, dass die erste Vertiefung sich in der bestimmten Richtung stetig (ohne Sprünge oder Absätze) und/oder mit stetiger Steigung (ohne Kanten mit einem Kantenwinkel kleiner als 150°, vorzugsweise kleiner als 160°, vorzugsweise kleiner als 170°) von der Mantelfläche 3 in die erste Vertiefung 8 ab. Der Kantenwinkel ist dabei definiert als der Winkel zwischen den beiden Flächen, die an der Kante zusammenstossen. Dies kann zum Beispiel über eine langsames Absenken des Bodens in der bestimmten und/oder über eine abgerundete Kante erzielt werden. Die erste Vertiefung 8 ist vorzugsweise so ausgebildet ist, dass der Draht in der ersten Vertiefung 8 (ausgehend von der bestimmten Richtung) weniger als 45°, vorzugsweise weniger als 30°, vorzugsweise weniger als 15°, vorzugsweise nicht, in eine axiale Richtung der Trommel gedreht wird. Dadurch kann die Belastung auf den Draht minimiert werden und die Wahrscheinlichkeit eines Drahtbruchs reduziert werden. Die Merkmale der ersten Vertiefung 8 treffen ebenso auf die zweite Vertiefung 8 zu. Die erste Vertiefung 8 kann identisch oder unterschiedlich zu der zweiten Vertiefung ausgebildet sein.

Der erste Klemmmechanismus 6 ist in einer ersten Vertiefung 8 der Mantelfläche 3 angeordnet. Vorzugsweise ist die erste Vertiefung 8 in einem Randbereich der Mantelfläche 3 angeordnet, so dass diese zwischen dem Aufrollbereich und der ersten Stirnseite 1 angeordnet ist. Vorzugsweise mündet die schneckenförmige Rille in die erste Vertiefung 8, so dass der Draht bis zum Eintritt in die Vertiefung 8 zum Befestigen des Endes des Drahts in der Rille geführt bleibt. In einem Ausführungsbeispiel ist die Ebene, in der der Draht in dem ersten Klemmmechanismus 6 festgeklemmt wird, in einem Winkel kleiner 30°, vorzugsweise kleiner 20°, vorzugsweise kleiner 10°, vorzugsweise kleiner 5° zu der Längsachse der Rille in der Mündung in die erste Vertiefung angeordnet. Besonders vorteilhaft ist es, diese Ebene in der Verlängerung der schneckenförmigen Rille, in der der Draht geführt wird, anzuordnen. Letzteres verbessert die Führung des Drahts in der Rille signifikant. Verlängerung soll hier heissen, dass die Längsachse der Rille unter Vernachlässigung des Schneckenwinkels in dieser Ebene verläuft. Vorzugsweise grenzt die schneckenförmige Rille in einem Umlauf an eine axiale Wand 8.1 der ersten Vertiefung an und mündet nach einem weiteren Umlauf um die Mantelfläche 3 in die erste Vertiefung 8. In anderen Worten verläuft die Rille, abgesehen von dem Schneckenwinkel, nahezu parallel zu der axialen Wand 8.1. Axiale Wand 8.1 heisst hier eine Wand deren Flächennormalen parallel zu der Drehachse der Trommel ist. Die axiale Wand 8.1 ist auf der Seite der ersten Vertiefung 8 der Aufrollfläche. Durch diese Anordnung der Rille, die direkt in die erste Vertiefung 8 führt, kann der Draht nahezu ohne jede Biegung in die erste Vertiefung 8, insbesondere an deren axiale Wand 8.1, geführt werden. Die radiale Wand 8.2 (oder Boden) der ersten Vertiefung 8 ist die Wand der Vertiefung 8, deren Flächennormalen grundsätzlich rechtwinkelig zu der Drehachse der Trommel ist. Vorzugsweise ist die radiale Wand 8.2 so ausgebildet, dass die radiale Wand 8.2 sich zumindest für einen ersten Abschnitt langsam, stetig (d.h. ohne Sprünge) und mit stetiger Steigung (d.h. ohne Kanten) von der Mantelfläche 3 in die erste Vertiefung 8 absenkt. Dadurch werden auf den Draht wirkende Kraftspitzen an Kanten der radialen Wand 8.2 vermieden. Vorzugsweise verläuft der aus der Rille kommende Draht im eingeklemmten Zustand über einen Teil der radialen Wand 8.2 in die erste Vertiefung 8 und vorzugsweise an der axialen Wand 8.1 entlang. Vorzugsweise ist die erste Vertiefung 8 zu der ersten Stirnseite 1 hin offen. Dies erlaubt eine bessere Einführung des Drahtendes zur Befestigung und/oder erlaubt den ersten Klemmmechanismus 6 von der ersten Stirnseite 1 aus zu bedienen.

Der erste Klemmmechanismus 6 drückt vorzugsweise den Draht gegen die axiale Wand 8.1. Allerdings ist es auch möglich, dass der erste Klemmmechanismus 6 den Draht zu dessen Befestigung gegen die radiale Wand 8.2 drückt oder gegen eine andere Klemmgegenfläche drückt.

Der erste Klemmmechanismus 6 weist einen Klemmblock 9 auf und ist so ausgebildet, dass der Klemmblock 9 zum Einklemmen des Drahts ohne Verdrehung einer Klemmfläche des Klemmblocks 9 verschiebbar ist. Dies kann zum Beispiel durch eine durch eine Ausnehmung in dem Klemmblock 9 geführte Schraube 10 erreicht werden. Wenn die Schraube 10 angezogen wird, so drückt der Schraubenkopf den Klemmblock 9 in die Schraubrichtung ohne die Klemmfläche zu verdrehen. Dadurch werden die beim Klemmen negativ auf den Draht wirkenden Scherkräfte reduziert und ein Drahtbruch verhindert. Dies verhindert auch, dass der Draht in einer engen Schlinge um die Klemmmutter gelegt werden muss und erlaubt somit den geklemmten Draht ohne grosse Biegungen einzuklemmen. Vorzugsweise weist der erste Klemmmechanismus 6 eine Feder auf, die den Klemmblock 9 gegen die Schraubrichtung drückt, so dass das Drahtende leichter in den Klemmspalt eingeführt werden kann.

Der zweite Klemmmechanismus 7 entspricht weitgehend dem zuvor beschriebenen ersten Klemmmechanismus 6. Nur die erste Vertiefung 8 unterscheidet sich leicht von einer zweiten Vertiefung 8 des zweiten Klemmmechanismus 7. Die Anordnung der axialen Wand 8.1 und der radialen Wand 8.2 in einer ersten Richtung, aus der der Draht in Vertiefungen kommt, sind gleich oder sehr ähnlich, so dass die obige Beschreibung ebenfalls anwendbar ist. Da in der zweiten Vertiefung 8 der Anfang des aufzuwickelnden Drahts in der zweiten Klemmvorrichtung 7 befestigt wird, muss die radiale Wand 8.3 der zweiten Vertiefung 8 in der der ersten Richtung entgegengesetzten Richtung nicht wie die radiale Wand 8.2 langsam, stetig (d.h. ohne Sprünge) und mit stetiger Steigung (d.h. ohne Kanten) von der Mantelfläche 3 in die erste Vertiefung führen. Hier wurde ein um den Klemmblock 9 eng anliegender Abschluss der radialen Wand 8.3 gewählt. Dies hilft zusammen mit der ebenfalls eng unter dem Klemmblock 9 gewählten radialen Wand zur Verdrehsicherung des Klemmblocks 9. Die Form der radialen Wand 8.3 ist so ausgebildet, dass diese einen Anschlag für das Drahtende ausbildet. Dies vermeidet ebenfalls, dass man sich an einem evtl. herausstehenden Drahtende verletzt. In der ersten Vertiefung 8, in der das andere Ende des Drahts nach dem Aufwickelvorgang befestigt wird, verläuft die radiale Wand 8.3 hingegen in der der ersten Richtung entgegengesetzten Richtung wie die radiale Wand 8.2 langsam, stetig (d.h. ohne Sprünge) und mit stetiger Steigung (d.h. ohne Kanten) von der Mantelfläche 3 in die erste Vertiefung 8. Dies hilft zum Beispiel den aufgewickelten Draht vor dem Befestigen zu spannen und/oder besser einzufädeln. Ein Steg 11 über dem Klemmblock 9 dient der Verdrehsicherung des Klemmblocks 9 und/oder um zu verhindern, dass der Draht, z.B. beim Spannen, von der Klemmfläche des Klemmblocks 9 rutscht. Ein Spalt zwischen dem Klemmblock 9 und der radialen Wand 8.2 erlaubt es, den Draht rechtwinkelig zu der Drahtachse und/oder ohne das Drahtende vorher abschneiden zu müssen auf die Klemmfläche des Klemmblocks 9 zu führen. Nachdem der Draht in dem ersten Klemmmechanismus 6 befestigt wird, kann der Draht ohne weitere Werkzeuge abgerissen werden. Vor dem Befestigen des Drahtendes kann der Draht noch gespannt werden. Alternativ kann der Draht aber auch vorher abgeschnitten werden und dann zwischen der Klemmfläche und der axialen Wand 8.1 einfädelt werden. Auch wenn die Anpassung des ersten und zweiten Klemmmechanismus 6 und 7 bzw. der ersten und zweiten Vertiefung 8 an den Beginn und das Ende des Aufwickelvorgangs vorteilhaft ist, ist es alternativ auch möglich, den ersten und zweiten Klemmmechanismus 6 und 7 bzw. die erste und zweite Vertiefung 8 identisch auszubilden.

In den Fig. 1 bis 11 ist das Ende der Rille fälschlicherweise in der Mitte der ersten Vertiefung gezeichnet, während das Ende der Rille tatsächlich in die radiale Wandung 8.2 der ersten Vertiefung mündet.

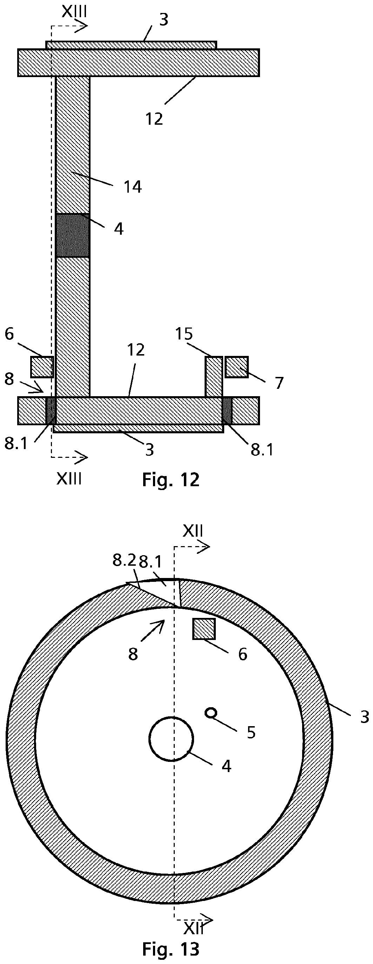

Fig. 12 und 13 zeigt ein weiteres Ausführungsbeispiel der erfindungsgemässen Trommel. Die Trommel ist nur schematisch dargestellt. Alle Merkmale des Ausführungsbeispiels der Fig. 1 bis 11 treffen ebenfalls auf das weitere Ausführungsbeispiel zu, sofern nicht explizit als anders beschrieben.

Die erste Vertiefung und/oder zweite Vertiefung 8 ist in dem weiteren Ausführungsbeispiel so ausgebildet, dass es den Draht von der Mantelfläche 3 zu der Innenmantelfläche 12 hindurchführt. Dies erlaubt, den ersten Befestigungsmechanismus 6 und/oder den zweiten Befestigungsmechanismus 7 innerhalb der Trommel anzuordnen, ohne den Draht mit vielen engen Biegungen an eine der Stirnseiten 1 und/oder 2 oder um diese herum zu führen. Die erste Vertiefung und/oder zweite Vertiefung 8 ist hier als Schlitz ausgeführt, dessen Boden 8.2 sich in der bestimmten Richtung von der Mantelfläche 3 absenkt, bis er auf der Innenmantelfläche 12 wieder austritt. Wie im Zusammenhang mit dem vorigen Ausführungsbeispiel beschrieben kann die Form des Absenkens unterschiedlich ausgebildet sein. Hier hat der Schlitz einen rechteckigen Querschnitt mit dem sich absenkenden Boden 8.2, der senkrecht zu den beiden axialen Wänden 8.1 angeordnet ist. Allerdings ist es auch möglich, dass der Schlitz 8 andere Querschnittsformen hat. Der Schlitz 8 kann zum Beispiel nach unten spitz zulaufen, so dass der Boden anstatt eine Fläche nur eine Linie ausbildet. Die erste und/oder zweite Vertiefung 8 kann auch als Loch ausgebildet sein, durch das das erste und/oder das zweite Ende des Drahts gefädelt wird, um zu dem ersten und/oder zweiten Befestigungsmechanismus 6, 7 geführt zu werden. Die erste und/oder zweite Vertiefung 8 kann auch als Ausnehmung ausgebildet sein, die zur ersten und/oder zweiten Stirnseite 1, 2 hin offen ist und somit das durchführen des Drahtes von der Mantelfläche 3 zu der Innenmantelfläche 12 vereinfacht. Viele weitere Realisierungen der ersten und/oder zweiten Vertiefung 8 sind möglich.

Der erste und zweite Befestigungsmechanismus 6, 7 sind nur schematisch dargestellt. Vorzugsweise sind diese wie oben beschrieben ausgebildet, wobei der Draht anstatt gegen die axiale Wand 8.1 der Vertiefung 8 nun gegen eine alternative Wand gedrückt wird. Vorzugsweise ist die alternative Wand für den ersten Befestigungsmechanismus 6 eine Wand des Hauptstegs 14, vorzugsweise dessen axiale Wand. In dem gezeigten Ausführungsbeispiel ist der Hauptsteg 14 soweit in den Hohlzylinder angeordnet, dass die äussere axiale Wand des Hauptstegs 14 auf der Höhe der ersten Vertiefung 8 oder weitere innen angeordnet ist und der durch die erste Vertiefung 8 geführte Draht an die äussere axiale Wand angelegt werden. Somit kann der erste Befestigungsmechanismus 6 den Draht gegen die äussere axiale Wand drücken und somit befestigen. Die äussere Wand bezieht sich für die erste Vertiefung 8 und den ersten Befestigungsmechanismus 6 auf die zur ersten Stirnseite 1 gereichte Wand des Hauptstegs 14. In dem gezeigten Ausführungsbeispiel ist ein kleiner Nebensteg 15, gegen den der Befestigungsmechanismus 7 den Draht pressen kann, um diesen zu befestigen. Die äussere Wand des Nebenstegs 15 ist auf der Höhe der zweiten Vertiefung 8 oder weitere innen angeordnet, so dass der durch die zweite Vertiefung 8 geführte Draht an die äussere axiale Wand des Nebenstegs angelegt werden kann. Die äussere Wand bezieht sich für die zweite Vertiefung 8 und den zweiten Befestigungsmechanismus 7 auf die zur ersten Stirnseite 1 gerichte Wand des Hauptstegs 14. In einem alternativen Ausführungsbeispiel wird der Hauptsteg 14 in der Mitte zwischen der ersten Stirnseite 1 und der zweiten Stirnseite 2 angeordnet, wobei der erste Befestigungsmechanismus 6 den Draht gegen die zur ersten Stirnseite 1 gerichteten Wand des Hauptstegs 14 drückt und der zweite Befestigungsmechanismus 7 den Draht gegen die zur zweite Stirnseite 2 gerichteten Wand des Hauptstegs 14 drückt. Vorzugsweise wird dann der Befestigungsmechanismus 6 und 7 von der entsprechenden ersten oder zweiten Vertiefung 8 ausgehend auf der anderen Seite der Trommelachse angeordnet, so dass der Draht von der entsprechenden ersten oder zweiten Vertiefung 8 zu der entsprechenden ersten oder zweiten Befestigungsmechanismus 6 oder 7 einen möglichst kleinen Winkel aufweist und die Kräfte auf den Draht möglichst gering hält. In einem weiteren Ausführungsbeispiel ist es ebenfalls möglich, den Draht nicht an dem Hauptsteg 14, sondern an einem oder zwei separaten Nebensteg(en) zu befestigen.

## Patentansprüche

1. Trommel für eine Drahtsäge, wobei die Trommel grundsätzlich zylinderförmig ist und eine Mantelfläche (3), eine erste Stirnseite (1) und eine zweite Stirnseite (2) aufweist, wobei die Trommel aufweist:
eine Aufrollfläche auf der Mantelfläche (3) mit einer schneckenförmigen Rille zur Führung des Drahtes beim Auf- und/oder Abrollen;
einen ersten Klemmmechanismus (6) zum Befestigen eines ersten Endes des Drahts;
einen zweiten Klemmmechanismus (7) zum Befestigen eines zweiten Endes des Drahts;
**gekennzeichnet**
- **durch** eine erste Vertiefung (8) in der Mantelfläche (3) zur Führung des ersten Ende des Drahts zu dem ersten Klemmmechanismus (6), wobei die erste Vertiefung (8) in eine bestimmte Richtung von der Mantelfläche (3) in die erste Vertiefung (8) absenkt, wobei die bestimmte Richtung einer Richtung, in der der Draht von der Mantelfläche (3) in die erste Vertiefung (8) geführt werden kann, entspricht, und
- **dadurch** dass der erste Klemmmechanismus (6) einen Klemmblock (9) mit einer Klemmfläche aufweist, wobei die Klemmfläche des Klemmblocks (9) zum Einklemmen des ersten Endes des Drahtes ohne Drehung der Klemmfläche verschiebbar ist.

2. Trommel nach Anspruch 1, wobei der sich absenkende Boden (8.2) der ersten Vertiefung (8) sich in der bestimmten Richtung von der Mantelfläche (3) kontinuierlich und/oder stetig und/oder mit stetiger Steigung in die erste Vertiefung (8) absenkt.

3. Trommel nach Anspruch 1 oder 2, wobei die erste Vertiefung (8) so ausgebildet ist, dass der Draht in der ersten Vertiefung (8) weniger als 45°, vorzugsweise weniger als 30°, vorzugsweise weniger als 15°, vorzugsweise nicht, in eine axiale Richtung der Trommel gedreht wird.

4. Trommel nach einem der Ansprüche 1 bis 3, wobei die bestimmte Richtung eine Richtung ist, in der der Draht aus der schneckenförmigen Rille herausläuft, bevor er in die erste Vertiefung 8 hineinläuft.

5. Trommel nach einem der Ansprüche 1 bis 4, wobei ein erstes Ende der schneckenförmigen Rille in die erste Vertiefung (8) mündet.

6. Trommel nach Anspruch 5 aufweisend eine zweite Vertiefung (8) zur Führung des zweiten Endes des Drahts zu dem zweiten Klemmmechanismus (7), wobei ein zweites Ende der schneckenförmigen Rille in die zweite Vertiefung (8) mündet.

7. Trommel nach einem der Ansprüche 1 bis 6, wobei die Trommel grundsätzlich hohlzylinderförmig mit einer nach innen gerichteten Innenmantelfläche (12) ausgebildet ist, wobei die erste Vertiefung (8) von der Mantelfläche (3) zur Innenmantelfläche (12) hindurchführt, wobei der erste Klemmmechanismus (6) in der durch den Hohlzylinder gebildeten Öffnung angeordnet ist.

8. Trommel nach einem der Ansprüche 1 bis 6, wobei der erste Klemmmechanismus (6) in der ersten Vertiefung (8) in der Mantelfläche (3) angeordnet ist.

9. Trommel nach Anspruch 8, wobei die erste Vertiefung (8) in der Mantelfläche (3) zu der ersten Stirnseite (1) der Trommel hin offen ist.

10. Trommel nach Anspruch 9, wobei der erste Klemmmechanismus (6) von der ersten Stirnseite (1) aus betätigt wird.

11. Trommel nach einem der Ansprüche 1 bis 10, wobei die erste Vertiefung (8) zwischen der Aufrollfläche und der ersten Stirnseite (1) angeordnet ist.

12. Trommel nach einem der Ansprüche 1 bis 11, wobei der Klemmblock (9) des ersten Klemmmechanismus (6) mit der Klemmfläche gegen eine Wand (8.1) der ersten Vertiefung (8) drückt, so dass der Draht zwischen der Wand (8.1) und der Klemmfläche befestigt werden kann.

13. Trommel nach einem der Ansprüche 1 bis 12, wobei der Klemmblock (9) des ersten Klemmmechanismus (6) eine Ausnehmung aufweist, durch den eine Schraube (10) geführt ist, die beim Anziehen der Schraube (10) den Klemmblock (9) zum Einklemmen des ersten Endes des Drahts verschiebt.

14. Drahtsäge aufweisend eine Trommel nach einem der vorigen Ansprüche.

## Claims

1. A drum for a wire saw, the drum being generally cylindrical and having a mantle surface (3), a first end face (1) and a second end face (2), the drum comprising:
- a winding surface on the mantle surface (3) with a helical groove for guiding the wire during winding and/or unwinding;
- a first clamping mechanism (6) for securing a first end of the wire;
- a second clamping mechanism (7) for securing a second end of the wire;
**characterized**
- **by** a first recess (8) in the mantle surface (3) for guiding the first end of the wire to the first clamping mechanism (6), the first recess (8) descending in a certain direction from the mantle surface (3) into the first recess (8), the certain direction corresponding to a direction in which the wire can be guided from the mantle surface (3) into the first recess (8), and
- in that the first clamping mechanism (6) comprises a clamping block (9) having a clamping surface, the clamping surface of the clamping block (9) being displaceable for clamping the first end of the wire without rotation of the clamping surface.

2. The drum according to claim 1, wherein the lowering bottom (8.2) of the first recess (8) lowers continuously and/or steadily and/or with a steady gradient into the first recess (8) in the certain direction from the mantle surface (3).

3. The drum according to claim 1 or 2, wherein the first recess (8) is formed such that the wire in the first recess (8) is rotated less than 45°, preferably less than 30°, preferably less than 15°, preferably not, in an axial direction of the drum.

4. The drum according to any of the claims 1 to 3, wherein the certain direction is a direction in which the wire passes out of the helical groove before passing into the first recess (8).

5. The drum according to any of the claims 1 to 4, wherein a first end of the helical groove opens into the first recess (8).

6. The drum according to claim 5 comprising a second recess (8) for guiding the second end of the wire to the second clamping mechanism (7), a second end of the helical groove opening into the second recess (8).

7. The drum according to any of claims 1 to 6, wherein the drum is basically hollow cylindrical in shape with an inwardly directed inner mantle surface (12), wherein the first recess (8) leads through from the mantle surface (3) to the inner mantle surface (12), wherein the first clamping mechanism (6) is arranged in the opening formed by the hollow cylinder.

8. The drum according to any of claims 1 to 7, wherein the first clamping mechanism (6) is arranged in the first recess (8) in the mantle surface (3).

9. The drum according to claim 8, wherein the first recess (8) in the mantle surface (3) is open towards the first end face (1) of the drum.

10. The drum according to claim 9, wherein the first clamping mechanism (6) is actuated from the first end face (1).

11. The drum according to any of claims 1 to 10, wherein the first recess (8) is arranged between the winding surface and the first end face (1).

12. The drum according to any of claims 1 to 11, wherein the clamping block (9) of the first clamping mechanism (6) presses with the clamping surface against a wall (8.1) of the first recess (8) so that the wire can be fixed between the wall (8.1) and the clamping surface.

13. The drum according to any of claims 1 to 12, wherein the clamping block (9) of the first clamping mechanism (6) has a recess through which a screw (10) is passed which, when the screw (10) is tightened, displaces the clamping block (9) for clamping the first end of the wire.

14. A wire saw comprising a drum according to any one of the preceding claims.

## Revendications

1. Tambour pour une scie à fil, le tambour étant fondamentalement cylindrique et comprenant une surface d'enveloppe (3), une première face frontale (1) et une deuxième face frontale (2), le tambour comprenant :
- une surface d'enroulement sur la surface d'enveloppe (3) avec une rainure en forme de vis sans fin pour guider le fil lors de l'enroulement et/ou du déroulement ;
- un premier mécanisme de serrage (6) pour fixer une première extrémité du fil ;
- un deuxième mécanisme de serrage (7) pour fixer une deuxième extrémité du fil ;
**caractérisé**
- **par** un premier renfoncement (8) dans la surface d'enveloppe (3) pour guider la première extrémité du fil vers le premier mécanisme de serrage (6), le premier renfoncement (8) s'abaissant dans une direction déterminée de la surface d'enveloppe (3) dans le premier renfoncement (8), la direction déterminée correspondant à une direction dans laquelle le fil peut être guidé de la surface d'enveloppe (3) dans le premier renfoncement (8), et
- en ce que le premier mécanisme de serrage (6) comprend un bloc de serrage (9) ayant une surface de serrage, la surface de serrage du bloc de serrage (9) pouvant être déplacée pour serrer la première extrémité du fil sans rotation de la surface de serrage.

2. Le tambour selon la revendication 1, dans lequel le fond (8.2) s'abaissant de la première cavité (8) s'abaisse dans la direction déterminée depuis la surface d'enveloppe (3) de manière continue et/ou régulière et/ou avec une pente continue dans la première cavité (8).

3. Le tambour selon l'une des revendications 1 ou 2, dans lequel la première cavité (8) est conçu de telle sorte que le fil dans le premier renfoncement (8) est tourné de moins de 45°, de préférence de moins de 30°, de préférence de moins de 15°, de préférence pas, dans une direction axiale du tambour.

4. Le tambour selon l'une des revendications 1 à 3, dans lequel la direction déterminée est une direction selon laquelle le fil sort de la rainure en forme de vis sans fin avant d'entrer dans la première cavité 8.

5. Le tambour selon l'une des revendications 1 à 4, dans lequel une première extrémité de la rainure en forme de vis sans fin débouche dans la première cavité (8).

6. Le tambour selon la revendication 5, comprenant une deuxième cavité (8) pour guider la seconde extrémité du fil vers le second mécanisme de serrage (7), une seconde extrémité de la rainure en forme de vis sans fin débouchant dans le second renfoncement (8).

7. Le tambour selon l'une des revendications 1 à 6, le tambour ayant une forme générale de cylindre creux avec une surface d'enveloppe intérieure (12) orientée vers l'intérieur, le premier renfoncement (8) passant de la surface d'enveloppe (3) à la surface d'enveloppe intérieure (12), le premier mécanisme de serrage (6) étant disposé dans l'ouverture formée par le cylindre creux.

8. Le tambour selon l'une quelconque des revendications 1 à 6, dans lequel le premier mécanisme de serrage (6) est disposé dans le premier renfoncement (8) dans la surface d'enveloppe (3).

9. Le tambour selon la revendication 8, dans lequel le premier renfoncement (8) dans la surface d'enveloppe (3) est ouvert vers la première face frontale (1) du tambour.

10. Le tambour selon la revendication 9, dans lequel le premier mécanisme de serrage (6) est actionné à partir de la première face d'extrémité (1).

11. Le tambour selon l'une des revendications 1 à 10, dans lequel le premier renfoncement (8) est situé entre la surface d'enroulement et la première face frontale (1).

12. Le tambour selon l'une des revendications 1 à 11, dans lequel le bloc de serrage (9) du premier mécanisme de serrage (6) appuie avec la surface de serrage contre une paroi (8.1) du premier renfoncement (8) de sorte que le fil peut être fixé entre la paroi (8.1) et la surface de serrage.

13. Le tambour selon l'une des revendications 1 à 12, dans lequel le bloc de serrage (9) du premier mécanisme de serrage (6) présente un évidement à travers lequel est guidée une vis (10) qui, lors du serrage de la vis (10), déplace le bloc de serrage (9) pour serrer la première extrémité du fil.

14. Une scie à fil comprenant un tambour selon l'une des revendications précédentes.
